Europäisches Patentamt

European Patent Office

Office européen des brevets

(11) Publication number: **0 514 997 A1**

# EUROPEAN PATENT APPLICATION

(21) Application number: **92201450.1**

(22) Date of filing: **21.05.92**

(51) Int. Cl.5: **A61G 5/04**, B62K 21/00

(30) Priority: **24.05.91 NL 9100894**

(43) Date of publication of application:
**25.11.92 Bulletin 92/48**

(84) Designated Contracting States:
**AT BE CH DE DK ES FR GB GR IT LI LU MC NL PT SE**

(71) Applicant: **LIGTVOET PRODUCTS B.V.**
**Windmolen 9**
**NL-5503 XV Veldhoven(NL)**

(72) Inventor: **Van der Vorst, Arnoldus Marinus**
**Johannes**
**Gruttostraat 23**
**NL-5667 PW Geldrop(NL)**

(74) Representative: **Vollebregt, Cornelis Jacobus**
**et al**
**Algemeen Octrooibureau P.O. Box 645**
**NL-5600 AP Eindhoven(NL)**

(54) **Three-wheel vehicle.**

(57) The invention relates to a three-wheel vehicle, in particular a wheelchair, provided with a frame (1), which is supported by two ground wheels near its rear side and by a steerable ground wheel (6) near its front side, said steerable ground wheel (6) being journalled in a support means (8). On either side of the ground wheel (6) one end of a coupling arm (11) is coupled to said support means (8), in such a manner that each coupling arm (11) is pivotable with respect to the support means (8) about an at least substantially perpendicularly extending first pivot axis (10). The ends of the coupling arms (11) remote from the support means (8) are coupled to the frame (1), by means of at least substantially vertically extending second pivot axes (12), in points located between the steerable ground wheel (6) and the ground wheels arranged near the rear sides. A steering arm (14) is connected to the coupling arms (11) by means of at least substantially vertically extending third pivot axes (17), in points located between said first and said second pivot axes (10,12).

Fig 1

The invention relates to a three-wheel vehicle, in particular a wheelchair, provided with a frame, which is supported by two ground wheels near its rear side and by a steerable ground wheel near its front side, said steerable ground wheel being pivotable with respect to the frame of the vehicle by means of a steering arm so as to steer the vehicle.

On the one hand such vehicles, in particular wheelchairs, are required to be of very compact construction, inter alia in connection with easy manoeuvrability in confined spaces and in connection with transport in a car or the like, whilst on the other hand sufficient room must be available to get in and out in a comfortable manner.

With known three-wheel vehicles of the above kind a support means, extending upwards above the ground wheel and being fixed to the frame, is usually present near the rear side of the ground wheel, an upwardly extending shaft being journalled in said support means, by means of which the steerable ground wheel is pivotally coupled to the frame. Between this fixedly arranged support means and the user's seat sufficient room must be available in order to enable the user to get in and out in a comfortable manner, so that the presence of said support means near the rear side of the steerable wheel imposes limitations on the possibility of achieving a compact construction of the vehicle.

According to the invention the ground wheel is journalled in a support means so as to be rotatable about a horizontal axis, one end of a coupling arm being coupled to said support means on either side of the ground wheel, in such a manner that each coupling arm is pivotable with respect to the support means about an at least substantially perpendicularly extending first pivot axis, whilst the ends of the coupling arms remote from the support means are coupled to the frame, by means of at least substantially vertically extending second pivot axes, in points located between the steerable ground wheel and the ground wheels arranged near the rear sides, whereby the distance between said second pivot axes is larger than the distance between said first pivot axes, whilst the steering arm is connected to the coupling arms by means of at least substantially vertically extending third pivot axes, in points located between said first and said second pivot axes.

When using the construction according to the invention no impeding fixed frame parts, which interfere with getting in and out, are present near the rear side of the steerable ground wheel, so that using the construction according to the invention will result in more room being available for getting in and out or in a more compact construction of the vehicle.

The invention will be explained in more detail hereafter with reference to an embodiment of the construction according to the invention diagrammatically illustrated in the accompanying Figures.

Figure 1 is a plan view of the front part of a vehicle according to the invention.

Figure 2 is a side view of a few parts of the vehicle shown in Figure 1.

The vehicle is provided with a frame 1, which comprises two frame beams 2 and 3 extending substantially in the longitudinal direction of the vehicle, slightly obliquely towards each other from the rear to the front. At some distance from their front ends the frame beams 2 and 3 are interconnected by means of a cross beam 4.

Furthermore stays 5 are provided between the front ends of the frame beams 2 and 3 and the cross beam 4. Near its rear side the frame is supported by two ground wheels (not shown), whose horizontally extending axes of rotation will generally be in line. Said ground wheels may be driven by means (not shown) provided on the frame, whereby said means can be controlled by a user of the vehicle, who during use will have taken place on a seat (not shown) likewise supported by the frame.

Near its front end the frame is supported by a steerable ground wheel 6. Said ground wheel 6 is coupled to two supports 8 located on either side of said ground wheel by means of a horizontally extending shaft 7 so as to be freely rotatable, said supports in the illustrated embodiment furthermore being connected to a bow 9 extending over the ground wheel.

The ends of coupling arms 11 are coupled to the supports 8 by means of upright first pivot axes 10. In the position of said coupling arms illustrated in full lines, which position is occupied by the coupling arms when the vehicle drives straight ahead, the coupling arms extend obliquely outwards and rearwards from the ground wheel 6, whilst the ends of the coupling arms remote from the ground wheel are curved towards each other, so that in the above-described position said ends extend more or less in the longitudinal direction of the vehicle.

Said ends of the coupling arms remote from the ground wheel 6 are pivotally coupled to the frame 1 by means of vertically extending second pivot axes 12.

It will be apparent that in the position of the ground wheel 6 intended for driving straight ahead the first pivot axes 10, as well as the pivot axes 12 located further to the rear, are arranged symmetrically with respect to the longitudinal centre plane of the vehicle.

Between the ends of the coupling rods 11, and more in particular in the ends of said coupling rods 11 located near the front first pivot axes 10, upwardly extending bushes 13 are secured to said coupling rods 11. The vertically deflected ends of rods 15 and 16 forming part of a steering arm 14 are inserted into said bushes 13, in such a manner that said downwardly deflected ends of the rods 15 and 16 are rotatable about third pivot axes 17, which extend parallel to said pivot axes 10 and 12.

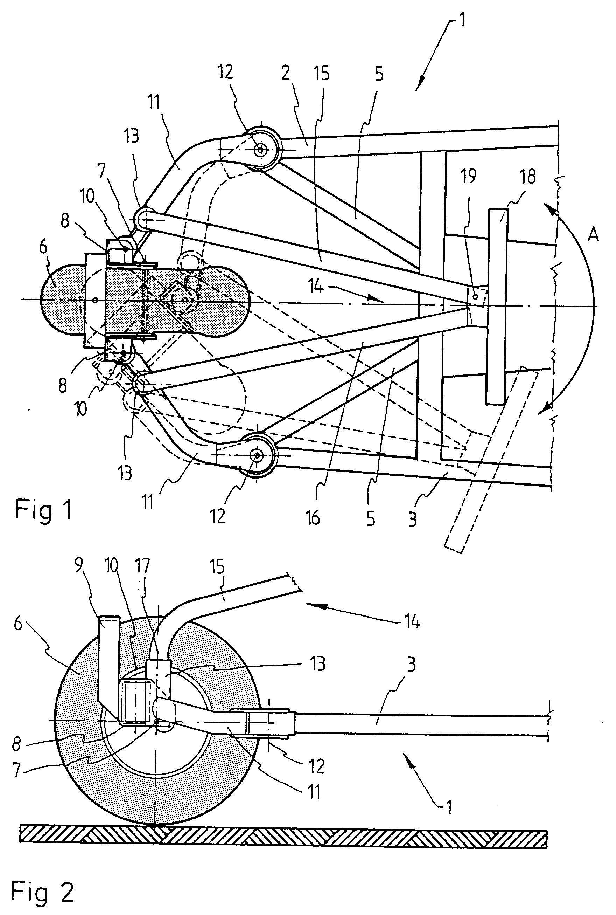

As will be apparent from Figures 1 and 2 the rods 15 and 16 extend rearwards from the ends of said rod accommodated in the bushes 13, in a direction towards each other. The rod 16 is thereby fixed to a grip 18 extending transversely to the longitudinal direction of the vehicle and forming part of the control arm 14.

The end of the rod 15 is pivotally coupled to said grip by means of a axis 19 extending parallel to the pivot axes 17.

The user of the vehicle can turn the ground wheel 6 by pivoting the control arm 14, as is indicated by means of the arrow A. Upon pivoting of the steering arm 14 the coupling arms 11 will be pivoted about the pivot axes 12, as a result of which also the ground wheel 6 will be caused to pivot. Thus the various arms can e.g. pivot from the position illustrated in full lines to the position illustrated in dotted lines. As will be apparent from Figure 1 thereby, when the construction according to the invention is used it is also effected that pivoting of the control arm 14 through a certain angle will result in the ground wheel 6 being pivoted through a larger angle, so that a comparatively small movement of the steering arm will result in a considerably larger movement of the steering wheel, which facilitates manoeuvring the three-wheel vehicle.

Furthermore it will be apparent that when e.g. the steering arm is pivoted towards the position illustrated in dotted lines, ample room is available to get in, without fixed frame parts located near the rear side of the ground wheel interfering with getting in or out.

## Claims

1. A three-wheel vehicle, in particular a wheelchair, provided with a frame, which is supported by two ground wheels near its rear side and by a steerable ground wheel near its front side, said steerable ground wheel being pivotable with respect to the frame of the vehicle by means of a steering arm so as to steer the vehicle, characterized in that the ground wheel is journalled in a support means so as to be rotatable about a horizontal axis, one end of a coupling arm being coupled to said support means on either side of the ground wheel, in such a manner that each coupling arm is pivotable with respect to the support means about an at least substantially perpendicularly extending first pivot axis, whilst the ends of the coupling arms remote from the support means are coupled to the frame, by means of at least substantially vertically extending second pivot axes, in points located between the steerable ground wheel and the ground wheels arranged near the rear sides, whereby the distance between said second pivot axes is larger than the distance between said first pivot axes, whilst the steering arm is connected to the coupling arms by means of at least substantially vertically extending third pivot axes, in points located between said first and said second pivot axes.

2. A vehicle according to claim 1, characterized in that the distance between said first and said third pivot axes is considerably smaller than the distance between said second and said third pivot axes.

3. A vehicle according to claim 1 or 2, characterized in that said steering arm comprises a pair of rods, said rods with their front ends being coupled to the coupling arms by means of said third pivot axes and with their other ends being connected to a grip, whereby one rod is fixed to said grip and the other rod is pivotally connected to said grip.

Fig 1

Fig 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-900 676 (THILLARD)<br>* the whole document *<br>--- | 1 | A61G5/04<br>B62K21/00 |
| X | GB-A-205 134 (HERDS)<br>* the whole document *<br>----- | 1 | |

**TECHNICAL FIELDS SEARCHED (Int. Cl.5)**

A61G
B62K
B62D

The present search report has been drawn up for all claims

| Place of search | Date of completion of the search | Examiner |
|---|---|---|
| THE HAGUE | 04 AUGUST 1992 | BAERT F. |